# EUROPEAN PATENT SPECIFICATION

(11) **EP 3 677 116 B1**
(45) Date of publication and mention of the grant of the patent: **26.01.2022**
(21) Application number: 17931658.3
(22) Date of filing: 20.11.2017
(51) Int. Cl.: A01K 23/00, A01K 1/015, A01K 1/01

(54) **ANIMAL LITTER BOX**
TIERSTREUBEHÄLTER
BAC À LITIÈRE POUR ANIMAUX

(30) Priority: 10.11.2017 JP 2017217081
(43) Date of publication of application: 08.07.2020
(73) Proprietor: Unicharm Corporation, Shikokuchuo-shi, Ehime 799-0111 (JP)
(72) Inventor: TAKAI, Chiyo, Kanonji-shi, Kagawa 769-1602 (JP); KANEKO, Shinya, Kanonji-shi, Kagawa 769-1602 (JP); KOIDO, Yuki, Kanonji-shi, Kagawa 769-1602 (JP)
(74) Representative: Staeger & Sperling Partnerschaftsgesellschaft mbB
(86) International application number: PCT/JP2017/041661
(87) International publication number: WO 2019/092891

(56) References cited:
- JP-A- 2004 313 114
- JP-A- 2008 148 603
- JP-A- 2011 135 839
- JP-A- 2016 158 621
- JP-A- 2017 153 402
- JP-A- 2017 153 402
- US-B2- 8 887 667

## Description

### [Technical Field]

The present invention relates to an animal litter box.

### [Background Art]

Animal litter boxes for use by animals such as cats are conventionally known. For example, PTL 1 discloses an animal litter box in which through holes are provided in the bottom surface (platform portion) of the main body, and excrement such as urine flows down through the through holes and is absorbed by an absorbent body (water absorbing sheet) that is arranged in a urine receiving tray located below.

### [Citation List]

### [Patent Literature]

[PTL 1] Japanese Patent Application Publication No. 2008-148603. Further prior art in the technical field of animal litter boxes are disclosed in documents JP2017 153402 A, JP 2004 313114 A and US 8,887,667 B2.

### [Summary of Invention]

### [Technical Problem]

In general, animals such as cats have a tendency to perform excretion at a designated place, and even when using an animal litter box, are likely to perform excretion at the same place every time, particularly in the vicinity of the edge of the animal litter box. Accordingly, even when using a conventional animal litter box such as the one described in PTL 1, such animals are likely to repeatedly perform excretion at the same place. In such cases, the fallen excrement becomes concentrated in the vicinity of an edge portion of the absorbent body, and the absorbent body quickly reaches the maximum absorption capacity in that region, thus requiring the absorbent body to be replaced frequently. In other words, due to a large amount of excrement being absorbed in a localized manner in the absorbent body, the absorbent body is replaced more frequently than in the case where excrement is absorbed broadly over the entire the absorbent body, making it more likely to cause problems in terms of efficiency and running cost.

The present invention was achieved in light of conventional problems such as that described above, and an aspect of the present invention is to provide an animal litter box that enables the absorbent body to be used efficiently.

### [Solution to Problem]

The present invention for achieving the above-described aspect is an animal litter box according to claim 1 having a longitudinal direction, a lateral direction, and a height direction, the animal litter box including:
an inner space that is a space where an animal performs excretion,
   the inner space being a space that is surrounded by at least a bottom surface and a wall portion,
   the bottom surface receiving excrement,
   the wall portion rising in the height direction from a periphery of the bottom surface; and an absorbent-body arrangement portion for arranging of an absorbent body that absorbs excrement,
   the absorbent-body arrangement portion being provided below the inner space in the height direction,
a longitudinal central position of the inner space being located shifted from a longitudinal central position of the absorbent-body arrangement portion.

Features of the present invention other than the above will become clear by reading the description of the present specification with reference to the accompanying drawings.

### [Advantageous Effects of Invention]

According to the present invention, it is possible to provide an animal litter box that enables the absorbent body to be used efficiently.

### [Brief Description of the Drawings]

FIG. 1 is a schematic perspective view of an animal litter box 1.
FIG. 2 includes a plan view of the animal litter box 1 from above in the height direction, and a view from the front side in the lateral direction.
FIG. 3 is an exploded perspective view of the animal litter box 1.
FIG. 4 is a cross-sectional view taken along A-A in FIG. 2.
FIG. 5 is a plan view illustrating the arrangement of a lower container 12 and a tray 13.
FIG. 6A is a diagram illustrating an excretion range in the case where an animal performs excretion in an animal litter box 2 of a comparative example. FIG. 6B is a diagram illustrating an excretion range in the case where an animal performs excretion in the animal litter box 1 of the present embodiment.
FIG. 7 is a diagram illustrating the positional relationship of an absorbent-body arrangement portion 13s and a notch 25 of a wall portion 21.

### [Description of Embodiments]

At least the following matters will become clear with the description of this specification and the attached drawings.

An animal litter box having a longitudinal direction, a lateral direction, and a height direction, the animal litter box including:
an inner space that is a space where an animal performs excretion,
   the inner space being a space that is surrounded by at least a bottom surface and a wall portion,
   the bottom surface receiving excrement,
   the wall portion rising in the height direction from a periphery of the bottom surface; and an absorbent-body arrangement portion for arranging of an absorbent body that absorbs excrement,
   the absorbent-body arrangement portion being provided below the inner space in the height direction,
a longitudinal central position of the inner space being located shifted from a longitudinal central position of the absorbent-body arrangement portion.

According to this animal litter box, to make use of the tendency of an animal such as a cat to excrete urine or the like in an end region (e.g., the region on the one side in the longitudinal direction) of the animal litter box, the arrangement location of the absorbent body is shifted to the one side of the longitudinal central position in advance in orderto make it more likely for excrement to be absorbed in the central region of the absorbent body. Accordingly, excrement is more likely to be absorbed over a larger area of the absorbent body, and the entirety of the absorbent body can be used efficiently. Also, excrement is less likely to leak out from the absorbent body, and the animal litter box can be used in a sanitary manner.

In such an animal litter box, it is according to the invention that
a shape of the bottom surface is in a rectangle in which a length in the longitudinal direction is longer than a length in the lateral direction.

According to this animal litter box, an animal that has entered the inner space can easily recognize the longitudinal direction and the lateral direction at a glance, making it more likely for the animal to perform excretion while along the longitudinal direction. In other words, the structure is likely to guide the animal to perform excretion on the longitudinal one side in the inner space. Accordingly, excrement is likely to be absorbed in the central region of the absorbent body, making it possible to use the absorbent body more efficiently.

In such an animal litter box, it is desirable that
the bottom surface has a urine passage portion through which excreted urine pass downward,
the longitudinal central position of the absorbent-body arrangement portion is eccentric on a one side with respect to the longitudinal central position of the inner space, and
a longitudinal central position of the urine passage portion is eccentric on the one side with respect to the longitudinal central position of the inner space.

According to this animal litter box, it becomes more likely for excrement such as urine that has been excreted in the region on the one side in the longitudinal direction to pass through the urine passage portion and to be absorbed by the absorbent body arranged directly below the urine passage portion. Also, granules of cat litter or the like are spread out over the urine passage portion, and an animal such as a cat prefers to perform excretion at a location where such cat litter is provided. Accordingly, the animal is likely to be guided to the location where excretion is intended to be performed in the inner space in the animal litter box.

In such an animal litter box, it is desirable that
the urine passage portion is provided at a lowest position in the bottom surface in the height direction.

According to this animal litter box, the cat litter is likely to accumulate over the urine passage portion that is provided at the lowest position. Accordingly, the animal is likely to recognize that the longitudinal one side where the cat litter is arranged is the location that is suited to excretion, making it more likely for the animal to perform excretion in that region.

In such an animal litter box, it is desirable that
the bottom surface has an inclined portion that is inclined from an outer edge portion of the bottom surface toward the urine passage portion, and
an inclination angle of the inclined portion located on the one side in the longitudinal direction with respect to the urine passage portion is larger than an inclination angle of the inclined portion located on an other side in the longitudinal direction with respect to the urine passage portion.

According to this animal litter box, even if the animal excretes urine or the like outside the urine passage portion, the urine is likely to flow along the inclined portion to the urine passage portion, without accumulating on the bottom surface. Also, the inclination angle of the inclined portion is more gentle on the other side in the longitudinal direction, and therefore the animal can walk more easily and can easily move from the other side to the one side in the longitudinal direction. On the other hand, on the one side in the longitudinal direction where excretion is actually performed, the inclination angle of the inclined portion is steeper, and urine or the like can swiftly move to the urine passage portion.

In such an animal litter box, it is according to the invention that
at least one of the wall portions has a notch serving as an entrance/exit of the inner space,
the longitudinal central position of the absorbent-body arrangement portion is eccentric on a one side with respect to the longitudinal central position of the inner space, and
a longitudinal central position of the notch is eccentric on an other side with respect to the longitudinal central position of the inner space.

According to this animal litter box, the notch serving as the entrance/exit is provided eccentric to the other side in the longitudinal direction, and therefore when the animal enters the inner space through the notch, the animal can easily recognize that the one side in the longitudinal direction is the back side of the inner space. Accordingly, the animal is likely to move to the one side in the longitudinal direction of the inner space, and perform excretion in the region on the one side. In other words, the structure is likely to guide the animal to perform excretion on the one side in the longitudinal direction.

In such an animal litter box, it is according to the invention that
the notch and the absorbent-body arrangement portion are at least partially overlapped with each other in the longitudinal direction.

According to this animal litter box, the absorbent-body arrangement portion holds the absorbent body, which is the source of the odor of excrement, and the absorbent-body arrangement portion is overlapped with the notch in the longitudinal direction. Accordingly, through the overlapped portion, the odor of excrement is likely to spread out from the inner space. Upon smelling the odor of its own excrement leaking out through the notch, the animal can recognize that it is a safe location, and can use the animal litter box with a sense of ease.

In such an animal litter box, it is desirable that
a longitudinal length of a region where the notch and the absorbent-body arrangement portion are overlapped with each other is shorter than a longitudinal length of a region where the notch and the absorbent-body arrangement portion are not overlapped with each other.

According to this animal litter box, the overlapping portion of the absorbent-body arrangement portion and the notch is not too large, thus minimizing the leakage of the odor of excrement and making it less likely to cause discomfort to the pet owner or the like. Also, due to a large region of the absorbent-body arrangement portion being overlapped with the wall portion, it is possible to suppress the case where sand kicked by the animal such as a cat after excretion will fly to the outside.

In such an animal litter box, it is desirable that
the animal litter box further includes a lower container in which the absorbent-body arrangement portion is provided, and
in the lower container, an area of the absorbent-body arrangement portion is smaller than an area of a portion where the absorbent body is not arranged.

According to this animal litter box, the animal can be guided to the region on the one side in the longitudinal direction when actually performing excretion, and therefore even if the absorbent-body arrangement portion occupies a smaller proportion of the area of the lower container, problems such as the leakage of excrement are not likely to occur. Accordingly, the area of the absorbent body can be made relatively smaller, the burdens of absorbent body replacement and cleaning can be alleviated, and cost can be kept low.

### Embodiment

### Overall Configuration

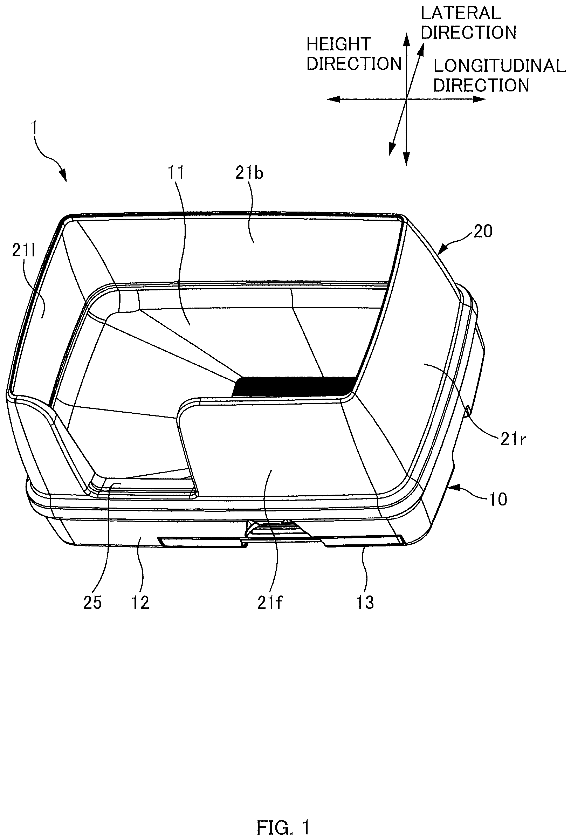

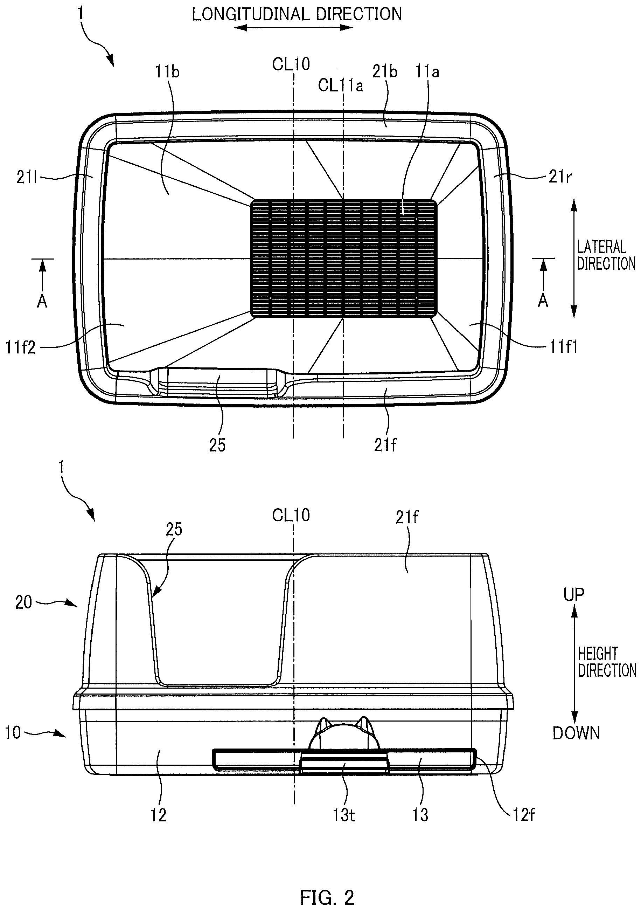

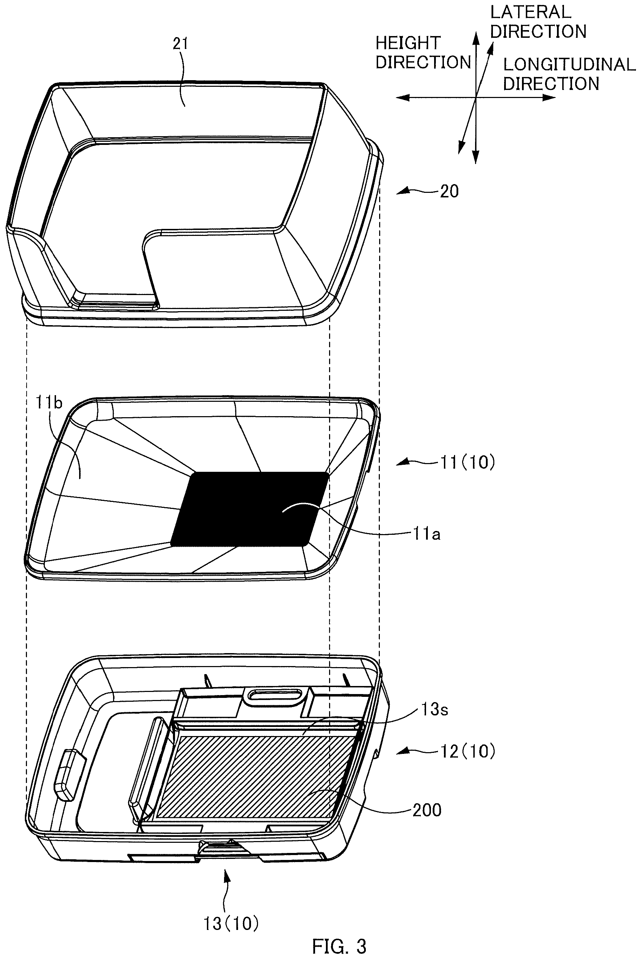

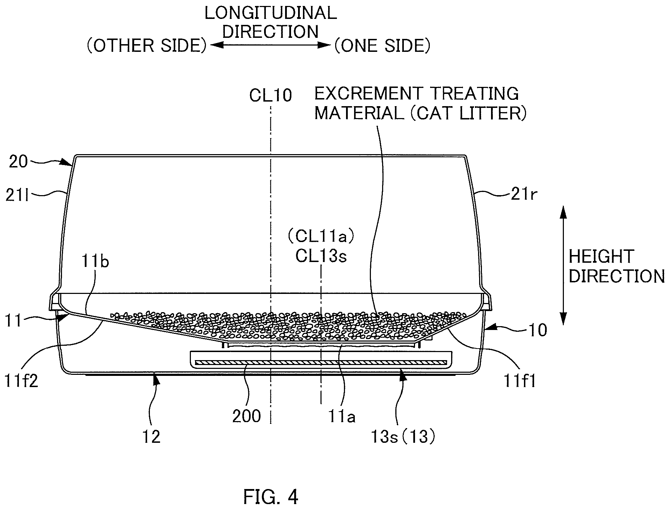

The following describes an animal litter box 1 as an example of an animal litter box according to the present embodiment. FIG. 1 is a schematic perspective view of the animal litter box 1. FIG. 2 includes a plan view of the animal litter box 1 from above in the height direction, and a view from the front side in the lateral direction. FIG. 3 is an exploded perspective view of the animal litter box 1. FIG. 4 is a cross-sectional view taken along A-A in FIG. 2. Note that the terms "longitudinal direction", "lateral direction", and "height direction" are defined as three directions that are orthogonal to each other as shown in FIG. 1. The height direction is a direction that conforms to the vertical direction.

The animal litter box 1 has a main body portion 10 that receives animal excrement, and a cover portion 20 that is removably attached on the upper side of the main body portion 10 in the height direction.

The main body portion 10 has an upper container 11, a lower container 12, and a tray 13. The upper container 11 is a box-shaped member having an open upper side, and an animal such as a cat performs excretion while standing on a bottom surface 11b of the upper container 11. In a view from above, the upper container 11 (main body portion 10) of the present embodiment is rectangular as shown in FIG. 2, and the length thereof in the longitudinal direction is longer than the length in the lateral direction. In other words, the long sides of the rectangle extend in the longitudinal direction, and the short sides of the rectangle extend in the lateral direction. It should be noted that the upper container 11 (main body portion 10) is not limited to having a rectangular shape, and may have an elliptical, polygonal, or other shape as long as the length in the longitudinal direction is longer than the length in the lateral direction.

As shown in FIG. 4, the bottom surface 11b of the upper container 11 has inclined portions 11f1 and 11f2 that are inclined inward (toward the center) from outer sides in the longitudinal direction. And, the bottom portion located lowermost in the height direction is provided with a urine passage portion 11a through which excrement such as urine excreted by an animal move from above to below in the height direction. The urine passage portion 11a has multiple holes (through holes) that extend through in the height direction, and excrement moves downward (toward the lower container 12) through the holes from above the upper container 11. Also, the urine passage portion 11a is provided at a location eccentric toward one side in the longitudinal direction. In the example in FIG. 2, the longitudinal central position CL11a of the urine passage portion 11a is shifted rightward of a longitudinal central position CL10 of the main body portion 10.

When the animal litter box 1 is to be used, granular excrement treating material such as cat litter is disposed on the upper surface of the urine passage portion 11a, and an animal such as a cat performs excretion on the excrement treating material (e.g., FIG. 4). The excrement treating material used in the animal litter box 1 is a granular material having a porous structure, such as zeolite or silica gel, and exhibits effects of moisture removal and deodorization by absorbing ammonia components upon contact with urine or the like excreted by an animal. Note that in order to suppress the case where granules of the excrement treating material fall through the holes of the urine passage portion 11a, it is desirable that the holes of the urine passage portion 11a have a shape and size that allows urine to pass but does not allow the excrement treating material to pass. For example, in the animal litter box 1 of the present embodiment, the urine passage portion 11a is formed by forming multiple slit-like through holes that are elongated in the longitudinal direction as shown in FIG. 2.

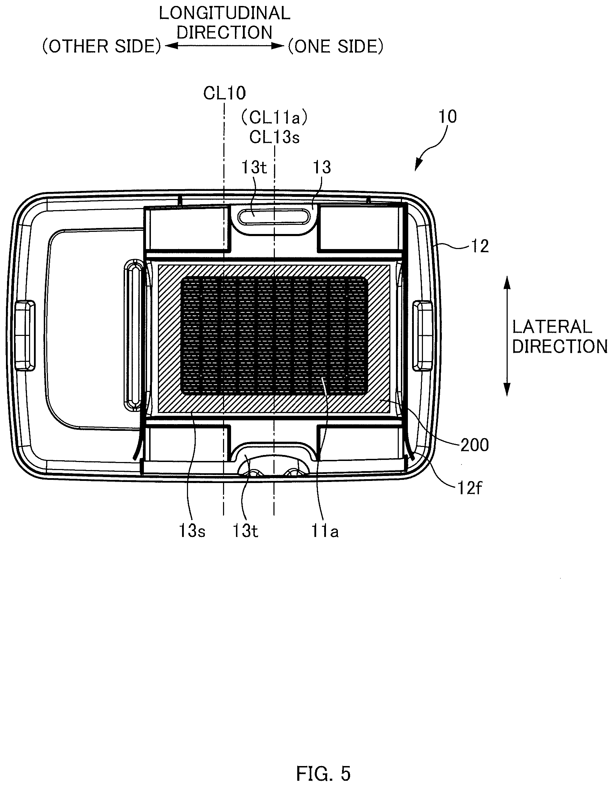

FIG. 5 is a plan view illustrating the arrangement of the lower container 12 and the tray 13. The lower container 12 is a box-shaped member having an open upper side, and is attached to the underside of the upper container 11 (see FIG. 3). Note that FIG. 5 shows the position of the urine passage portion 11a when arranged under the upper container 11 in order to give this description. The lower container 12 includes a tray housing portion 12f that houses the tray 13. In the animal litter box 1 of the present embodiment, the tray housing portion 12f has an opening that extends in the lateral direction of the lower container 12, and the tray 13 can be inserted into the lower container 12 through the opening. Also, the tray housing portion 12f is provided at a position eccentric to one side in the longitudinal direction.

The tray 13 is a shallow and flat box-shaped container on which an absorbent sheet (e.g., a later-described absorbent body 200) for absorbing excreted urine or the like is arranged. In the present embodiment, the tray 13 is formed having a rectangular shape that is symmetric in the longitudinal direction and in the lateral direction. Also, an absorbent-body arrangement portion 13s for arranging the absorbent body 200 is provided in the lateral central portion. When the tray 13 is housed in the tray housing portion 12f of the lower container 12, the longitudinal central position CL13s of the absorbent-body arrangement portion 13s is located shifted on the one side (the right side in FIG. 5) of the longitudinal central position CL10 of the main body portion 10. In the present embodiment, the longitudinal central position CL13s of the absorbent-body arrangement portion 13s and the longitudinal central position CL11a of the urine passage portion 11a are substantially the same position (see FIGS. 4 and 5).

The tray 13 also has a handle portion 13t in each of the two lateral end portions. The tray 13 can be slid in the lateral direction by grabbing and operating the handle portions 13t when the tray 13 is to be inserted into the lower container 12 or withdrawn from the lower container 12. Note that because the tray 13 has a symmetric shape in the lateral direction as described above, the tray 13 can be inserted into the lower container 12 in either direction with respect to the lateral direction (i.e., the front and back can be reversed).

The absorbent body 200 arranged in the tray 13 is a liquid-absorbent sheet member that absorbs urine excreted by an animal such as a cat, and is formed by a liquid-absorbent material such as pulp fibers or a superabsorbent polymer. Also, deodorizing microcapsules and an antibacterial agent may be provided in the absorbent body 200 in order to trap the odor of absorbed urine and prevent the growth of bacteria. In FIG. 5, the absorbent body 200 is shown by the hatched portion. When the animal litter box 1 is to be used, the absorbent body 200 is arranged in the absorbent-body arrangement portion 13s as shown in FIG. 5, and the central position in the longitudinal direction of the absorbent body 200 and the central position CL13s in the longitudinal direction of the absorbent-body arrangement portion 13s are approximately the same position. In other words, the absorbent body 200 is arranged directly under the urine passage portion 11a in the height direction. Accordingly, excrement excreted by an animal such as a cat moves (falls) down through the urine passage portion 11a and is absorbed by the absorbent body 200. Note that as shown in FIG. 5, the absorbent-body arrangement portion 13s of the tray 13 has a larger area than the urine passage portion 11a. Accordingly, excrement that falls through the urine passage portion 11a onto the absorbent-body arrangement portion 13s is absorbed by the absorbent body 200 and prevented from leaking out from the absorbent-body arrangement portion 13s.

The cover portion 20 has wall portions 21 that surround the four sides in the longitudinal direction and the lateral direction. Specifically, the cover portion 20 has a front wall portion 21f and a back wall portion 21b that extend along the longitudinal direction and form the long sides of the rectangle, and a right wall portion 21r and a left wall portion 211 that extend along the lateral direction and form the short sides of the rectangle. When the cover portion 20 is attached to the top side of the main body portion 10 as shown in FIG. 1, the four wall portions 21 rise upward in the height direction from the periphery of the bottom surface 11b of the upper container 11, and the animal litter box 1 is surrounded on the four sides by the wall portions 21. In this specification, the "inner space" of the animal litter box 1 is defined as the region surrounded by the bottom surface 11b and the wall portions 21f, 21b, 21r, and 211. This "inner space" is the space in the animal litter box 1 where an animal such as a cat actually performs excretion. In the animal litter box 1, the longitudinal central position of the inner space and the longitudinal central position CL10 of the main body portion 10 are equivalent positions. Accordingly, the longitudinal central position of the inner space will hereinafter also be denoted by CL10.

The cover portion 20 has a notch 25 at at least one location in one of the wall portions 21 provided on the four sides, and the notch 25 serves as an entrance/exit for an animal. In the present embodiment, the notch 25 is formed in a portion of the front wall portion 21f, and an animal such as a cat can enter and exit the inner space of the animal litter box 1 through the notch 25.

### Excretion performed using animal litter box 1

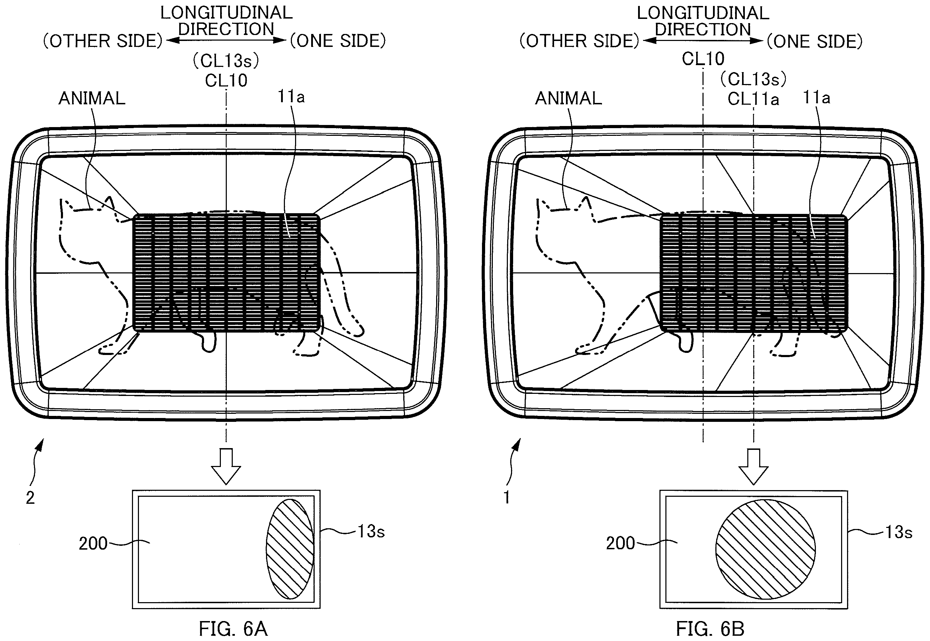

Next, the case where an animal performs excretion using the animal litter box 1 of the present embodiment will be described with use of a comparative example. FIG. 6A is a diagram illustrating an excretion range in the case where an animal performs excretion in an animal litter box 2 of a comparative example. FIG. 6B is a diagram illustrating an excretion range in the case where an animal performs excretion in the animal litter box 1 of the present embodiment.

The animal litter box 2 of the comparative example has basically the same structure as the animal litter box 1 of the present embodiment, and is constituted by the main body portion 10 and the cover portion 20. Also, similarly to the animal litter box 1, the animal litter box 2 has an inner space that is a region surrounded by the bottom surface 11b of the upper container 11 (main body portion 10) and the wall portions 21 of the cover portion 20. However, in the animal litter box 2, the arrangement of the urine passage portion 11a provided in the bottom surface 11b of the upper container 11 (main body portion 10) is different from the arrangement in the animal litter box 1. Specifically, in the animal litter box 2, the urine passage portion 11a is provided in the central portion in the longitudinal direction (and the lateral direction). In other words, in the animal litter box 2, the urine passage portion 11a is arranged such that the central position CL11a of the urine passage portion 11a in the longitudinal direction matches the central position CL10 in the longitudinal direction of the inner space. Moreover, the absorbent body 200 is also matched with the position of the urine passage portion 11a so as to absorb and prevent the leakage of excrement that has passed through the urine passage portion 11a. Specifically, the absorbent-body arrangement portion 13s is arranged such that the central position CL13s of the absorbent-body arrangement portion 13s for arranging the absorbent body 200 substantially matches the central position CL10 in the longitudinal direction of the inner space.

In general, when an animal such as a cat performs excretion in the inner space of an animal litter box, the animal has a tendency to perform excretion at the same place every time. Specifically, if the inner space of the animal litter box is elongated in the longitudinal direction, there is a tendency to perform excretion at a fixed position in the vicinity of a longitudinal end. In other words, excretion is likely to be performed at a position that is eccentric from the central portion in the longitudinal direction in the inner space of the animal litter box. For example, in the case shown in FIG. 6A, excretion is always performed in a region that is shifted to the right side (the one side) of the central portion in the longitudinal direction in the inner space of the animal litter box.

In the animal litter box 2 of the comparative example, the urine passage portion 11a that allows excrement such as urine to pass downward is arranged in the central portion in the longitudinal direction. For this reason, excrement that has been excreted at the one (rightward) longitudinal end portion passes through the one (rightward) longitudinal end portion of the urine passage portion 11a, falls to the one longitudinal end portion of the absorbent body 200 (absorbent-body arrangement portion 13s), and is absorbed in the range shown by the hatched portion in FIG. 6A. Accordingly, when excretion is repeatedly performed in the one longitudinal end portion, the absorbed amount of excrement is likely to reach the maximum in a localized manner in the region corresponding to the one longitudinal end portion of the absorbent body 200. In the case shown in FIG. 6A, the absorption performance degrades in a localized manner in the region corresponding to the rightward end portion of the absorbent body 200, which is shown by the hatched portion, and there is a risk that excrement that cannot be absorbed will leak out from the rightward end. For this reason, regardless of the fact that plenty of excrement can be absorbed in the region corresponding to the leftward end portion of the absorbent body 200, the entire absorbent body 200 needs to be replaced, thus leading to poor efficiency and an increase in cost.

In contrast, in the animal litter box 1 of the present embodiment, the urine passage portion 11a is shifted to the one side from the longitudinal center, and therefore excrement passes through the longitudinal central region of the urine passage portion 11a and falls to the absorbent body 200. Also, similarly to the urine passage portion 11a, the absorbent-body arrangement portion 13s for arranging the absorbent body 200 is shifted to one side from the longitudinal center. In other words, excrement such as urine passes through the central position CL11a of the urine passage portion 11a as shown in FIG. 6B and is likely to be absorbed in the central region of the absorbent body 200, which is shown by the hatched portion. For this reason, the excrement is absorbed while spreading out from the central region of the absorbent body 200 toward the longitudinal end regions, and the excrement is likely to be absorbed over the entire region of the absorbent body 200. Accordingly, even if excretion is performed repeatedly, the absorbent body 200 does not need to be replaced until the maximum absorption capacity is reached over the entirety of the absorbent body 200, thus making it possible for the absorbent body 200 to be used more efficiently than in the case of the comparative example, and cost can be suppressed due to replacement being performed less frequently. This configuration also suppresses the case where excrement cannot be absorbed by the absorbent body 200 and leaks, thus making it possible for the animal litter box 1 to be used in a more sanitary manner.

Also, in the present embodiment, the animal litter box 1 (main body portion 10) is has a rectangular shape elongated in the longitudinal direction. Accordingly, an animal that enters the inner space is likely to recognize the longitudinal direction and the lateral direction at a glance, making it more likely for the animal to perform excretion while in a posture along the longitudinal direction (see FIG. 6B). In other words, the structure is likely to guide the animal to perform excretion on the longitudinal one side in the inner space. Also, given that the urine passage portion 11a and the absorbent body 200 are arranged eccentric to the longitudinal one side, urine or the like excreted at the longitudinal one end region of the animal litter box 1 is likely to be absorbed in the central region of the absorbent body 200 (absorbent-body arrangement portion 13s).

### EXCREMENT TREATING MATERIAL

Note that in the animal litter box 1, the urine passage portion 11a is provided at the lowest position in the height direction in the bottom surface 11b of the upper container 11. Accordingly, when the excrement treating material (e.g., cat litter) is arranged in the animal litter box 1, the excrement treating material is likely to accumulate more in the region on the one side (right side) in the longitudinal direction so as to cover the located-lowest, urine passage portion 11a as shown in FIG. 4. Accordingly, the animal can be more easily guided to perform excretion on the one side in the longitudinal direction. This is because an animal such as a cat generally prefers to perform excretion at a location having a larger amount of cat litter or the like. In other words, due to the cat litter being arranged eccentric to the one side (right side) of the longitudinal central position CL10, the animal is likely to recognize that the one side (right side) in the longitudinal direction having the cat litter is suited to excretion, making it more likely for the animal to perform excretion in that region.

Also, in the animal litter box 1, the bottom surface 11b of the upper container 11 has the inclined portion 11f1 on the one side (right side) in the longitudinal direction, and the inclined portion 11f2 on the other side (left side) in the longitudinal direction. Due to the inclined portion 11f being provided in the bottom surface 11b, even if the animal excretes urine or the like in a region outside the urine passage portion 11a, the urine is likely to flow along the inclined portion 11f to the located-lowest, urine passage portion 11a, without accumulating on the bottom surface 11b.

Also, the inclination angle of the inclined portion 11f1 is set higher than the inclination angle of the inclined portion 11f2 (see FIG. 4). According to this structure, the inclination angle of the inclined portion 11f2 is smaller on the other side (left side) in the longitudinal direction, and therefore the animal can walk more easily, and can easily move from the other side to the one side in the longitudinal direction. In other words, according to this structure, the animal is likely to be guided to the back side (the one side in the longitudinal direction) of the inner space. On the other hand, the one side (right side) in the longitudinal direction is the region where the animal performs excretion. Accordingly, due to the inclination angle of the inclined portion 11f1 being set large, even if excretion is performed outside (on the one side in the longitudinal direction) of the urine passage portion 11a, the urine or the like can swiftly flow along the inclined portion 11f1 to the urine passage portion 11a at the lowest position.

Also, in the animal litter box 1, the area of the absorbent-body arrangement portion 13s is set smaller than 1/2 the total area of the bottom surface portion of the lower container 12 (see FIG. 5) . In other words, letting the area of the lower container 12 be S12, an area S13s of the absorbent-body arrangement portion 13s, which is the portion where the absorbent body 200 is arranged, is smaller than the area of the portion where the absorbent body 200 is not arranged (S12 - S13), or in other words 0.5 × S12 > S13. As described above, in the present embodiment, the animal can be guided to actually perform excretion in a region on the one side in the longitudinal direction in the inner space of the animal litter box 1. For this reason, even if the absorbent-body arrangement portion 13s occupies a smaller proportion of the area of the lower container 12, problems such as the leakage of excrement are not likely to occur. Accordingly, the absorbent body 200 for arrangement in the absorbent-body arrangement portion 13s can be made relatively smaller, the burdens of absorbent body 200 replacement and cleaning can be alleviated, and cost can be kept low.

Note that it is sufficient that the area of the absorbent body 200 disposed in the absorbent-body arrangement portion 13s is, at a maximum, an area for covering a region that is approximately 75% of the area S13s of the absorbent-body arrangement portion 13s. In other words, it is possible to use the absorbent body 200 whose absorption region is less than or equal to 75% of the region where excretion will possibly be performed. As shown in FIG. 5, in the first place, the area of the absorbent-body arrangement portion 13s is set larger than the area of the urine passage portion 11a that allows the passage of excrement such as urine, and the region where urine or the like is actually excreted is a portion of the urine passage portion 11a, and therefore if the area of the absorbent body 200 is approximately 75% of the area of the absorbent-body arrangement portion 13s, urine or the like can be substantially absorbed rather than leaking.

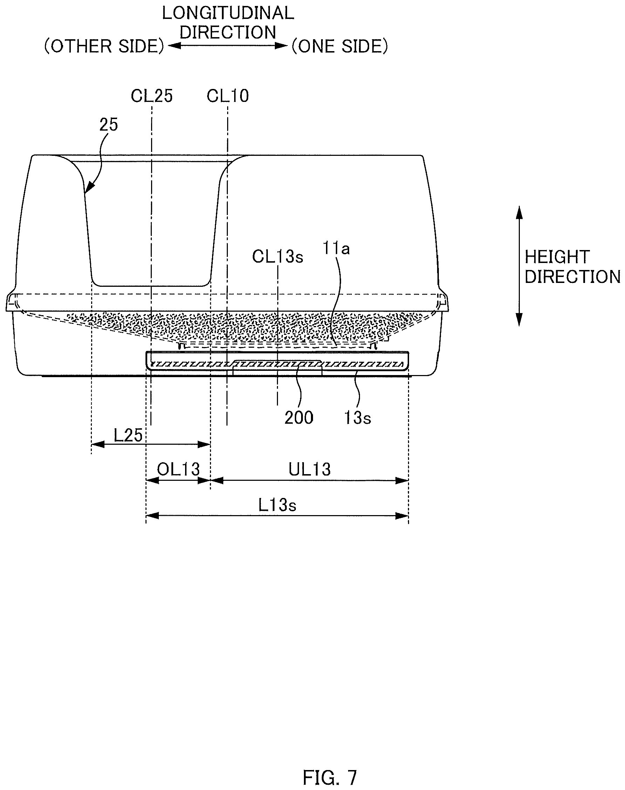

Next, the arrangement of the notch 25, which is the entrance/exit of the animal litter box 1, will be described. FIG. 7 is a diagram illustrating the positional relationship of the absorbent-body arrangement portion 13s and the notch 25 of the wall portion 21. As described above, in the animal litter box 1, the longitudinal central position CL13s of the absorbent-body arrangement portion 13s is shifted to the one side (right side) in the longitudinal direction with respect to the longitudinal central position CL10 of the inner space. In contrast, the longitudinal central position CL25 of the notch 25 is shifted to the other side (left side) in the longitudinal direction with respect to the longitudinal central position CL10. In other words, in the animal litter box 1, the entrance/exit (notch 25) and the absorbent body 200 (absorbent-body arrangement portion 13s) are arranged on opposite sides in the longitudinal direction.

When an animal enters the inner space of the animal litter box 1, the animal moves through the notch 25 into the region inward of the wall portions 21. The notch 25 is arranged eccentric to the other side (left side in FIG. 7) in the longitudinal direction of the central position CL10 of the inner space, and therefore after passing through the notch 25, the animal recognizes that the one side (right side in FIG. 7) in the longitudinal direction is the back side of the inner space of the animal litter box 1, and the animal is likely to move to the one side in the longitudinal direction and perform excretion in the region corresponding to end portion on the one side. Due to the notch 25 and the absorbent-body arrangement portion 13s being arranged on opposite sides in the longitudinal direction in this way, the animal is likely to be guided to perform excretion on the one side in the longitudinal direction.

It should be noted that even in the case where the notch 25 and the absorbent-body arrangement portion 13s are arranged on opposite sides in the longitudinal direction, it is desirable that they are at least partially overlapped in the longitudinal direction. In FIG. 7, a region of the absorbent-body arrangement portion 13s having a longitudinal length L13s and a region of the notch 25 having a longitudinal length L25 are overlapped in the longitudinal direction in the region denoted by a length OL13.

In the animal litter box 1, the inner space is surrounded by the wall portions 21, and therefore with the exception of the portion where the notch 25 is provided, the wall portions 21 basically suppress the leakage of the odor of urine or the like excreted in the inner space. In opposite terms, the odor is likely to leak out through the notch 25. Accordingly, the animal can smell the odor of its own excrement leaking out from the notch 25 and thus recognize that it is a safe place, and relax when performing excretion. Also, in the animal litter box 1, the absorbent body 200 (absorbent-body arrangement portion 13s), which is the source of the odor of excrement, is overlapped with the notch 25 in the longitudinal direction. Accordingly, the odor of excrement is likely to spread to the outside through the overlapped portion, and the animal is likely to feel at ease.

Also, in the longitudinal length L13s of the absorbent-body arrangement portion 13s, the length OL13 of the region of the absorbent-body arrangement portion 13s that is overlapped with the notch 25 in the longitudinal direction is shorter than a length UL13 of the non-overlapped region (OL13 < UL13). In this way, the overlapping portion of the absorbent-body arrangement portion 13s and the notch 25 is not too large, thus minimizing the leakage of the odor of excrement and making it less likely to cause discomfort to the pet owner or the like. Also, animals such as cats have a tendency to kick the litter with their legs after finishing excretion in order to cover the excrement with litter. If the length OL13 of the overlapping region of the absorbent-body arrangement portion 13s and the notch 25 is longer than the length UL13 of the non-overlapped region in the longitudinal direction, there is a risk that when the animal kicks the cat litter (excrement treating material) after excretion, the kicked cat litter (excrement treating material) will easily fly outside through the notch 25. In contrast, if the length UL13 is increased, the wall portions 21 can suppress the case where kicked litter flies out from the inner space.

### Other embodiments

Although the embodiment of the present disclosure have been described hereinabove, the above embodiment of the present disclosure is simply to facilitate understanding of the present disclosure and are not in any way to be construed as limiting the present disclosure. The present disclosure may variously be changed or altered without departing from its gist and encompass equivalents thereof. For example, modifications which will be described below are possible.

In the above embodiment, the cover portion 20 is provided with the wall portions 21 so as to surround the four sides in the longitudinal direction and the lateral direction, and the upper portion of the cover portion 20 is open, but a ceiling portion may be provided at the upper portion of the cover portion 20. In other words, the inner space of the animal litter box 1 may be a space that is surrounded by the bottom surface 11b of the upper container 11, the wall portions 21 of the cover portion 20, and the ceiling portion (not shown) of the cover portion 20.

Also, although the cover portion 20 has a configuration for being removably attached to the main body portion 10 in the above embodiment, a configuration is possible in which the cover portion 20 and the main body portion 10 are formed as a single body. In other words, wall portions that correspond to the wall portions 21 may be provided on the longitudinal and lateral outer edge portions of the main body portion 10 (upper container 10).

Although the granular cat excrement treating material (e.g., cat litter) is disposed on the bottom portion of the upper container 10 in the above embodiment, there is no limitation whatsoever to this.

### [Reference Signs List]

1 animal litter box, 2 animal litter box (comparative example),
10 main body portion, 11 upper container, 11a urine passage portion,
11b bottom surface,
11f1 inclined portion (one side), 11f2 inclined portion (other side),
12 lower container, 12f tray housing portion,
13 tray, 13s absorbent-body arrangement portion, 13t handle portion,
20 cover portion,
21 wall portion,
21f front wall portion, 21b back wall portion, 21r right wall portion, 211 left wall portion,
25 notch (entrance/exit),
200 absorbent body,
CL10 central position (inner space, main body portion 10),
CL13s central position (absorbent-body arrangement portion),
L25 length (notch), L13s length (absorbent-body arrangement portion)

## Claims

1. An animal litter box (1) having a longitudinal direction, a lateral direction, and a height direction,
the animal litter box (1) comprising:
an inner space that is a space where an animal performs excretion,
the inner space being a space that is surrounded by at least a bottom surface (11b) and one or more wall portions (21),
the bottom surface (11b) receiving excrement,
the wall portion (21) rising in the height direction from a periphery of the bottom surface (11b); and
an absorbent-body arrangement portion (13s) for arranging of an absorbent body (200) that absorbs excrement,
the absorbent-body arrangement portion (13s) being provided below the inner space in the height direction,
at least one of the wall portions (21) in the longitudinal direction having a notch (25) that serves as an entrance/exit of the inner space,
a longitudinal central position (CL25) of the notch (25) being eccentric on an other side with respect to the longitudinal central position of the inner space,
the notch (25) and the absorbent-body arrangement portion (13s) being at least partially overlapped with each other in the longitudinal direction, wherein
a shape of the bottom surface (11b) is in a rectangle in which a length in the longitudinal direction is longer than a length in the lateral direction,
**characterized in that**
a longitudinal central position of the inner space is located shifted from a longitudinal central position of the absorbent body arrangement portion, and
the longitudinal central position of the absorbent body arrangement portion being eccentric on another side with respect to the longitudinal central position of the inner space.

2. The animal litter box according to claim 1, wherein
the bottom surface (11b) has a urine passage portion (11a) through which excreted urine pass downward, and
a longitudinal central position (CL11a) of the urine passage portion (11a) is eccentric on the one side of the absorbent-body arrangement portion with respect to the longitudinal central position of the inner space.

3. The animal litter box according to claim 2, wherein
the urine passage portion (11a) is provided at a lowest position in the bottom surface (11b) in the height direction.

4. The animal litter box according to claim 2 or 3, wherein
the bottom surface (11b) has an inclined portion that is inclined from an outer edge portion of the bottom surface (11b) toward the urine passage portion (11a), and
an inclination angle of the inclined portion located on the one side in the longitudinal direction with respect to the urine passage portion (11a) is larger than an inclination angle of the inclined portion located on an other side in the longitudinal direction with respect to the urine passage portion (11a).

5. The animal litter box according to any one of claims 1 to 4, wherein
a longitudinal length of a region where the notch (25) and the absorbent-body arrangement portion (13s) are overlapped with each other is shorter than a longitudinal length of a region where the notch (25) and the absorbent-body arrangement portion (13s) are not overlapped with each other.

6. The animal litter box according to any one of claims 1 to 5, wherein
the animal litter box (1) further comprises a lower container in which the absorbent-body arrangement portion (13s) is provided, and
in the lower container, an area of the absorbent-body arrangement portion (13s) is smaller than an area of a portion where the absorbent body (200) is not arranged.

## Patentansprüche

1. Tiertoilette (1) mit einer Längsrichtung, einer Querrichtung und einer Höhenrichtung,
wobei die Tiertoilette (1) umfasst:
einen Innenraum, der ein Raum ist, in dem ein Tier seine Exkretion tätigt,
wobei der Innenraum ein Raum ist, der von mindestens einer Bodenfläche (11b) und einem oder mehreren Wandabschnitten (21) umgeben ist,
wobei die Bodenfläche (11b) die Exkremente aufnimmt,
wobei der Wandabschnitt (21) in der Höhenrichtung von einem Umfang der Bodenfläche (11b) ansteigt; und
einen Absorptionskörper-Anordnungsabschnitt (13s) zum Anordnen eines Absorptionskörpers (200), der Exkremente absorbiert,
wobei der Absorptionskörper-Anordnungsabschnitt (13s) in der Höhenrichtung unterhalb des Innenraums vorgesehen ist,
wobei mindestens einer der Wandabschnitte (21) in der Längsrichtung eine Aussparung (25) aufweist, die als Eingang/Ausgang des innenraums dient,
wobei eine zentrale Längsposition (CL25) der Aussparung (25) auf einer anderen Seite in Bezug auf die zentrale Längsposition des Innenraums exzentrisch ist,
wobei die Aussparung (25) und der Absorptionskörper-Anordnungsabschnitt (13s) einander in der Längsrichtung zumindest teilweise überlappen, wobei
eine Form der Bodenfläche (11b) ein Rechteck ist, bei dem eine Länge in der Längsrichtung länger ist als eine Länge in der Querrichtung,
**dadurch gekennzeichnet, dass**
eine zentrale Längsposition des Innenraums von einer zentralen Längsposition des Absorptionskörper-Anordnungsabschnitts versetzt angeordnet ist, und
die zentrale Längsposition des Absorptionskörper-Anordnungsabschnitts auf einer anderen Seite in Bezug auf die zentrale Längsposition des Innenraums exzentrisch ist.

2. Tiertoilette nach Anspruch 1, wobei
die Bodenfläche (11b) einen Urindurchlassabschnitt (11a) aufweist, durch den ausgeschiedener Urin nach unten läuft, und
eine zentrale Längsposition (CL11a) des Urindurchlassabschnitts (11a) auf der einen Seite des Absorptionskörper-Anordnungsabschnitts in Bezug auf die zentrale Längsposition des Innenraums exzentrisch ist.

3. Tiertoilette nach Anspruch 2, wobei
der Urindurchlassabschnitt (11a) an einer in Höhenrichtung niedrigsten Stelle der Bodenfläche (11b) vorgesehen ist.

4. Tiertoilette nach Anspruch 2 oder 3, wobei
die Bodenfläche (11b) einen geneigten Abschnitt aufweist, der von einem äußeren Kantenabschnitt der Bodenfläche (11b) in Richtung auf den Urindurchlassabschnitt (11a) geneigt ist, und
ein Neigungswinkel des geneigten Abschnitts, der sich auf der einen Seite in der Längsrichtung in Bezug auf den Urindurchiassabschnitt (11a) befindet, größer ist als ein Neigungswinkel des geneigten Abschnitts, der sich auf einer anderen Seite in der Längsrichtung in Bezug auf den Urindurchlassabschnitt (11a) befindet.

5. Tiertoilette nach einem der Ansprüche 1 bis 4, wobei
eine längsgerichtete Länge eines Bereichs, in dem die Aussparung (25) und der Absorptionskörper-Anordnungsabschnitt (13s) einander überlappen, kürzer ist als eine längsgerichtete Länge eines Bereichs, in dem die Aussparung (25) und der Absorptionskörper-Anordnungsabschnitt (13s) einander nicht überlappen.

6. Tiertoilette nach einem der Ansprüche 1 bis 5, wobei
die Tiertoilette (1) ferner einen unteren Behälter aufweist, in dem der Absorptionskörper-Anordnungsabschnitt {13s) vorgesehen ist, und
in dem unteren Behälter eine Fläche des Absorptionskörper-Anordnungsabschnitts (13s) kleiner ist als eine Fläche eines Abschnitts, in dem der Absorptionskörper (200) nicht angeordnet ist.

## Revendications

1. Bac à litière pour animaux (1) ayant une direction longitudinale, une direction latérale et une direction de la hauteur,
le bac à litière pour animaux (1) comprenant :
un espace intérieur qui est un espace où un animal effectue ses excrétions,
l'espace intérieur étant un espace qui est entouré par au moins une surface de fond (11b) et une ou plusieurs parties de paroi (21),
la surface de fond (11b) recevant des excréments,
la partie de paroi (21) s'élevant dans la direction de la hauteur à partir d'une périphérie de la surface de fond (11b) ; et
une partie d'agencement de corps absorbant (13s) pour l'agencement d'un corps absorbant (200) qui absorbe des excréments,
la partie d'agencement de corps absorbant (13s) étant disposée au-dessous de l'espace intérieur dans la direction de la hauteur,
au moins l'une des parties de paroi (21) dans la direction longitudinale ayant une encoche (25) qui sert d'entrée/sortie de l'espace intérieur,
une position centrale longitudinale (CL25) de l'encoche (25) étant excentrée d'un autre côté par rapport à la position centrale longitudinale de l'espace intérieur,
l'encoche (25) et la partie d'agencement de corps absorbant (13s) se chevauchant mutuellement au moins partiellement dans la direction longitudinale, une forme de la surface de fond (11b) étant un rectangle dans lequel une longueur dans la direction longitudinale est plus grande qu'une longueur dans la direction latérale,
**caractérisé par le fait qu'**
une position centrale longitudinale de l'espace intérieur est située en étant décalée à partir d'une position centrale longitudinale de la partie d'agencement de corps absorbant, et
la position centrale longitudinale de la partie d'agencement de corps absorbant étant excentrée d'un autre côté par rapport à la position centrale longitudinale de l'espace intérieur.

2. Bac à litière pour animaux selon la revendication 1, dans lequel
la surface de fond (11b) a une partie de passage d'urine (11a) à travers laquelle l'urine excrétée passe de façon descendante, et
une position centrale longitudinale (CL11a) de la partie de passage d'urine (11a) est excentrée du premier côté de la partie d'agencement de corps absorbant par rapport à la position centrale longitudinale de l'espace intérieur.

3. Bac à litière pour animaux selon la revendication 2,
dans lequel la partie de passage d'urine (11a) est disposée à une position la plus basse dans la surface de fond (11b) dans la direction de la hauteur.

4. Bac à litière pour animaux selon l'une des revendications 2 ou 3, dans lequel
la surface de fond (11b) a une partie inclinée qui est inclinée à partir d'une partie de bord extérieur de la surface de fond (11b) vers la partie de passage d'urine (11a), et
un angle d'inclinaison de la partie inclinée située du premier côté dans la direction longitudinale par rapport à la partie de passage d'urine (11a) est plus grand qu'un angle d'inclinaison de la partie inclinée située d'un autre côté dans la direction longitudinale par rapport à la partie de passage d'urine (11a).

5. Bac à litière pour animaux selon l'une quelconque des revendications 1 à 4, dans lequel
une longueur longitudinale d'une région où l'encoche (25) et la partie d'agencement de corps absorbant (13s) se chevauchent mutuellement est plus petite qu'une longueur longitudinale d'une région où l'encoche (25) et la partie d'agencement de corps absorbant (13s) ne se chevauchent pas mutuellement.

6. Bac à litière pour animaux selon l'une quelconque des revendications 1 à 5, dans lequel
le bac à litière pour animaux (1) comprend en outre un récipient inférieur dans lequel la partie d'agencement de corps absorbant (13s) est disposée, et
dans le récipient inférieur, une zone de la partie d'agencement de corps absorbant (13s) est plus petite qu'une zone d'une partie où le corps absorbant (200) n'est pas disposé.
